# EUROPEAN PATENT SPECIFICATION

(11) **EP 3 322 189 B1**
(45) Date of publication and mention of the grant of the patent: **25.12.2019**
(21) Application number: 16306478.5
(22) Date of filing: 10.11.2016
(51) Int. Cl.: H04N 21/2343, H04N 19/51, H04N 19/40

(54) **METHOD AND SYSTEM FOR CONTROLLING VIDEO TRANSCODING**
VERFAHREN UND SYSTEM ZUR STEUERUNG DER VIDEOTRANSCODIERUNG
PROCÉDÉ ET SYSTÈME POUR CONTRÔLER LE TRANSCODAGE VIDÉO

(43) Date of publication of application: 16.05.2018
(73) Proprietor: Alcatel Lucent, 91620 Nozay (FR)
(72) Inventor: STEVENS, Christoph, 2018 Antwerpen (BE); RONDAO ALFACE, Patrice, 2018 Antwerpen (BE)
(74) Representative: MERH-IP Matias Erny Reichl Hoffmann Patentanwälte PartG mbB

(56) References cited:
- EP-A2- 1 137 289
- US-A1- 2001 047 517
- US-A1- 2013 343 450
- US-A1- 2016 105 675
- US-A1- 2016 156 948
- US-A1- 2016 212 438
- US-A1- 2016 255 355
- "Guided Transcoding in a Cloud DVR", ERICSSON, no. Future_Video_Coding_Workshop_4, 21 November 2015 (2015-11-21), XP030001655,
- RUSERT THOMAS ET AL: "Guided just-in-time transcoding for cloud-based video platforms", 2016 IEEE INTERNATIONAL CONFERENCE ON IMAGE PROCESSING (ICIP), IEEE, 25 September 2016 (2016-09-25), pages 1489-1493, XP033016768, DOI: 10.1109/ICIP.2016.7532606

## Description

### Field of Invention

The present invention relates to video coding. Particular embodiments relate to a method and system for controlling transcoding of at least one video stream from a reference quality into at least one different quality.

### Background

These days more and more users consume an ever increasing quantity and variety of video content on a plethora of devices. The majority of these huge amounts of video content are delivered through HTTP Adaptive Streaming (HAS). The quality of video delivery through HAS typically is adapted according to the available bandwidth, which results in a variable selection of the bitrate for that content. The delivery of those streams typically needs to be maximized per node. Typically after a week the content becomes less popular and is purged from the storage, ending up in the so-called long tail (that is, the many pieces of content that exist but are not popular). However, if that content is at some later time requested, an instant and costly Just In Time Transcode (JITX, or also JITT) operation then has to be performed and each CDN (Content Delivery Network) node and the attached CDVR (Cloud Digital Video Recorder) product needs to keep up with the transcoding complexity for the long tail content. This typically means that content of one week old needs to be purged from the most expensive storage caches, due to optimizations in storage cost and active manageability of the VOD (Video On Demand) catalogue. On the one hand there is a large number of users, who dynamically request a large variety of content of different qualities. Some of the content qualities will typically be purged and will therefore need instant transcoding when they are requested by users. Most likely, the bandwidth will be available, and hence the transcoding needs to be done for the requested higher qualities, which may result in a higher complexity per JITX.

On the other hand the CDVR and CDN are typically dimensioned for only a limited number of streams, and the evolution in the demand and the available formats is outdating the assumptions on which the CDN delivery nodes are dimensioned. Keeping up with the transcoding demand by controlling the required transcoding complexity is important for the quality of experience of users.

CDN and CDVR products lack a well-established basis in order to decide whether to purge a certain VOD quality or to keep it. Currently, after a week it is typically thrown away. When there is a request for this thrown-away content, there is no decision model to decide whether, after the recreation, the transcoded streams need to be kept in storage or need to be thrown away.

If a current user requests a stream and after a while quickly starts browsing in the stream, the JITX is typically not able to manage complexity for multiple transcoding jobs and users, and therefore only worst-case provisioning is typically used.

It is difficult to optimize JITX complexity decisions without extra information, so if a CDN / CDVR product has been dimensioned with a certain transcoding capacity for N streams for a certain quality, then N+1 streams will exceed that capacity. The (N+1)th user and further users cannot be served and there is no well-established basis to handle this case, for example for intelligently relaying the decision not to serve that or those users to another node in the network.

From the publication by R. Aparicio-Pardo, K. Pires, A. Blanc, and G. Simon. 2015. "Transcoding live adaptive video streams at a massive scale in the cloud", Proceedings of the 6th ACM Multimedia Systems Conference (MMSys '15). ACM, New York, NY, USA, 49-60, it is known to use combinatorial optimization techniques to decide and modify HAS qualities in a repository to be JITX transcoded (in particular by modifying available bitrates and resolutions), in order to optimize quality of experience for the available bandwidth and the number of users.

However, results are only minimally better than those obtainable by reconstructing original ABR (Adaptive BitRate) HAS repositories.

US 2001/0047517 A1 discloses a method and apparatus for performing intelligent transcoding of multimedia data between two or more network elements in a client-server or client-to-client service provision environment. Accordingly, one or more transcoding hints associated with the multimedia data may be stored at a network element and transmitted from one network elements to another. One or more capabilities associated with one of the network elements may be obtained and transcoding may be performed using the transcoding hints and the obtained capabilities in a manner suited to the capabilities of the network element. Multimedia data includes still images, and capabilities and transcoding hints include bitrate, resolution, frame size, color quantization, color pallette, color conversion, image to text, image to speech, Regions of Interest (ROI), or wavelet compression. Multimedia data further may include motion video, and capabilities and transcoding hints include rate, spatial resolution, temporal resolution, motion vector prediction, macroblock coding, or video mixing.

US 2016/0156948 A1 discloses adaptive video transcoding based on parallel chunked log analysis. The adaptive video transcoding method comprises receiving an intermediate video stream generated from an intermediate transcoding. The method also receives an intermediate transcoding log stream associated with the intermediate video stream. The method partitions the intermediate video stream into a plurality of video chunks, where each video chunk corresponding to a portion of video data of the video stream. The method further generates video chunk statistics for each of the video chunks using the intermediate transcoding log stream and transcoding parameters for each of the video chunks based on the generated video chunk statistics. The method transcodes each of the video chunks to a target format in parallel based on the generated transcoding parameters. The method assembles the transcoded video chunks into a target video stream in the target format.

### Summary

Embodiments of a method and system according to the invention are set out in the appended claims. They will be more readily understood after reading the following detailed description taken in conjunction with the accompanying drawings.

It is an object of embodiments according to the present invention to increase the transcoding operation density, that is, to allow more transcoding operations to take place concurrently.

According to a first aspect of the present invention there is provided a method for controlling transcoding of at least one video stream from a reference quality into at least one different quality. The method comprises: determining at least one respective complexity signature of the at least one video stream; determining complexity requirements for transcoding the at least one video stream from the reference quality into the at least one different quality, based on the determined at least one respective complexity signature; comparing the determined complexity requirements to a complexity threshold; and, if it is found that the determined complexity requirements exceed the complexity threshold, adapting at least one control parameter of the transcoding.

In this way, the method can achieve the object of the present invention by dynamically controlling and adapting the transcoding complexity for the requested video stream(s), in order to allow more transcoding operations to take place concurrently.

In this context, it is to be understood that a control parameter of the transcoding refers to a parameter controlling operation of one or more transcoders.

In a further developed embodiment, the at least one respective complexity signature is representative of a number of transcoding processing operations for respective segments of the at least one video stream.

In this way, the method can take into account information about the content of the video stream(s), in order to reduce the likelihood that otherwise attempting to control complexity may lead to unforeseen situations wherein the complexity requirements may exceed the complexity threshold.

In a further developed embodiment, the complexity requirements are further determined based on at least one transcoding hint signal associated with the at least one different quality of the video stream, the at least one transcoding hint signal comprising at least one hint of at least one of the following: a prediction data translation hint for translating prediction data of the video stream in the reference quality into the at least one different quality; a quantization parameter hint configured for specifying at least one quantization parameter to be used for encoding at least one predefined spatial region of the video stream in the at least one different quality; and a transcoding instruction hint for extending a prediction search technique for encoding the video stream into the at least one different quality, associated with a complexity cost of performing the respective extended prediction search technique; wherein adapting the at least one control parameter comprises adapting a prediction search technique based on the transcoding instruction hint.

In this way, the method can control the complexity taking into account predetermined hints about the video stream(s) in the different quality or qualities.

In a further developed embodiment, adapting the at least one control parameter comprises at least one of the following: adapting a duration of at least one segment of the at least one video stream to be transcoded; and adapting an order of at least one segment of the at least one video stream to be transcoded.

In this way, the method can decrease the number of segments for which the complexity requirements are likely to exceed the complexity threshold, and/or can rearrange segments in order to reduce the required complexity at discrete segments, without necessarily needing to reduce the overall complexity.

In a further developed embodiment, the method comprises adapting a manifest file associated with the at least one video stream in order to take account of the adapted duration.

In this way, a receiving buffer at a client side, receiving the video stream(s), can determine the length of video it has received based on a straightforward calculation.

In a further developed embodiment, the duration of the at least one segment is decreased to a duration higher than a predefined minimum group of pictures length.

In this way, the frequency of IDR (Instantaneous Decoding Refresh) frames, which may require more storage, processing and bandwidth, can be kept under control.

In yet another further developed embodiment, the duration of the at least one segment is additionally or alternatively increased to a duration lower than a predefined maximum group of pictures length.

In this way, it remains possible to change between multiple visual qualities of the video stream(s) without an appreciable delay.

In a further developed embodiment, the method comprises consulting a machine learning prediction module configured for associating the at least one control parameter with a predicted intrinsic visual quality of the at least one video stream in the at least one different quality, in order to adapt the at least one control parameter. The machine learning prediction module has been trained based on a plurality of reference video streams each transcoded using a plurality of different control parameters of different complexities, and based on a corresponding plurality of preferably automatically determined intrinsic visual quality scores due to using the plurality of different control parameters.

Intrinsic visual quality of a video is to be understood in this document as a value resulting from an objective or subjective measure of the video. Objective metrics may include but are not restricted to PSNR (Peak Signal to Noise Ratio), SAD (Sum of Absolute Differences), MSE (Mean Square Error), etc. Subjective metrics may include MOS measures (Mean Opinion Score) through subjective experiments, or measures interpolated from databases of such scores for specific content, etc.

Video quality, in this document generally denoted by "quality", measures may comprise these "intrinsic visual quality measures", but also values of bitrate, resolution, or any combination of these. "Predicted intrinsic visual quality" is to be understood in this document as a prediction of the intrinsic visual quality using aforementioned objective or subjective metrics. This prediction is useful when several transcoding complexity choices are available and lead to different output intrinsic visual qualities.

In this way, the method can learn to optimize itself. In a specific embodiment, the machine learning prediction module may comprise a (preferably convolutional) neural network configured for learning to associate the at least one control parameter with a predicted intrinsic visual quality of the at least one video stream in the at least one different quality, based on the following inputs to the neural network: a plurality of reference video streams each transcoded using a plurality of different control parameters of different complexities, and a corresponding plurality of preferably automatically determined intrinsic visual quality scores due to using the plurality of different control parameters.

According to another aspect of the present invention, there is provided a system for controlling a transcoder for transcoding of at least one video stream from a reference quality into at least one different quality. The system comprises: a complexity module, a complexity control module, a comparing module and a control parameter adapting module. The complexity module is configured for determining at least one respective complexity signature of the at least one video stream. The complexity control module is configured for determining complexity requirements for transcoding the at least one video stream from the reference quality into the at least one different quality, based on the determined at least one respective complexity signature. The comparing module is configured for comparing the determined complexity requirements to a complexity threshold. The control parameter adapting module is configured for, if it is found that the determined complexity requirements exceed the complexity threshold, adapting at least one control parameter of the transcoding.

It will be understood by the skilled person that the features and advantages disclosed hereinabove with respect to various embodiments of the method may also apply, *mutatis mutandis,* to various embodiments of the system.

In a further developed embodiment, the at least one respective complexity signature is representative of a number of transcoding processing operations for respective segments of the at least one video stream.

In a further developed embodiment, the complexity control module is further configured for determining the complexity requirements determined based on at least one transcoding hint signal associated with the at least one different quality of the video stream, the at least one transcoding hint signal comprising at least one hint of at least one of the following: a prediction data translation hint for translating prediction data of the video stream in the reference quality into the at least one different quality; a quantization parameter hint configured for specifying at least one quantization parameter to be used for encoding at least one predefined spatial region of the video stream in the at least one different quality; and a transcoding instruction hint for extending a prediction search technique for encoding the video stream into the at least one different quality, associated with a complexity cost of performing the respective extended prediction search technique; wherein adapting the at least one control parameter comprises adapting a prediction search technique based on the transcoding instruction hint.

In a further developed embodiment, the control parameter adapting module is further configured for adapting the at least one control parameter by at least one of the following: adapting a duration of at least one segment of the at least one video stream to be transcoded; and adapting an order of at least one segment of the at least one video stream to be transcoded.

In a further developed embodiment, the system is further configured for adapting a manifest file associated with the at least one video stream in order to take account of the adapted duration.

In a further developed embodiment, the control parameter adapting module is further configured for decreasing the duration of the at least one segment to a duration higher than a predefined minimum group of pictures length. In yet another further developed embodiment, the control parameter adapting module is additionally or alternatively configured for increasing the duration of the at least one segment to a duration lower than a predefined maximum group of pictures length.

In a further developed embodiment, the system comprises a machine learning prediction module configured for associating the at least one control parameter with a predicted intrinsic visual quality of the at least one video stream in the at least one different quality. The machine learning prediction module is configured for being trained based on a plurality of reference video streams each transcoded using a plurality of different control parameters of different complexities, and based on a corresponding plurality of preferably automatically determined intrinsic visual quality scores due to using the plurality of different control parameters; and wherein the system is configured for consulting the machine learning prediction module in order to adapt the at least one control parameter.

This system might be part of a network node in a content delivery network.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the method for downloading.

In the context of the present specification, it is to be understood that transcoder may be referred to as encoders, because a transcoder encodes an input to an output.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an example graph over time of complexity of a plurality of video streams to be encoded;
Figures 2A-2B schematically illustrate example problems of summed complexity exceeding a budget for encoding a plurality of video streams, e.g. the video streams of Figure 1;
Figure 2C schematically illustrates operation of an embodiment of a system according to the present invention;
Figures 3A-3B schematically illustrate embodiments of a system according to the present invention, e.g. the system of Figure 2C;
Figures 4A-4B schematically illustrate transcoders to be controlled by embodiments of a system according to the present invention;
Figure 5 schematically illustrates a flowchart of an embodiment of a method according to the present invention;
Figure 6 schematically illustrates a flowchart of an embodiment of a method according to the present invention;
Figure 7 schematically illustrates a flowchart of an embodiment of a method according to the present invention;
Figure 8 schematically illustrates a flowchart of an embodiment of a method according to the present invention; and
Figure 9 schematically illustrates an example of an optimization trade-off for an embodiment of a method according to the present invention.

### Description of embodiments

In the present application, reference is made to THS or transcoding hint signals, and related information, described in the European patent application entitled "Method and transcoder for video transcoding" in the name of the Applicant and filed with application number EP 16306474.4, and in the European patent application entitled "Method and device for generating a signal comprising video transcoding hints" in the name of the Applicant and filed with application number EP 16306476.9, both on the same day as the present application.

Various embodiment invention may use input models that contain information on the video quality / complexity operational points for each stream (per segment) based on complexity signatures and transcoding hint signal, so that when the transcoder gets a lot of transcoding requests, it can make an intelligent decision about how to share its processing power among the various requests. Intelligent decisions may preferably include adapting the local search, changing the encoder order permutation, and/or reducing the GOP size.

An aim of several embodiments, it is possible to "shave the JITX peak load" for the next M segments for N+1 video streams.

Various embodiments make use of a transcoding complexity model which is fed with the content-dependent per-stream and per-segment time complexity signatures. A number of users (users 1..3..n-1) consuming video streams using adaptive streaming techniques (such as HAS (HTTP Adaptive Streaming), MPEG-DASH (Dynamic Adaptive Streaming over HTTP), HLS (HTTP Live Streaming), etc.) are typically being served by a CDN in the network. Each of those users may request a particular version of a video stream (e.g. a particular spatial part, temporal part, section, etc.), and its related quality.

If a (predefined or dynamically determined) complexity budget of the transcoding node of the video delivery service doesn't allow a user to be served with his or her requested quality and bandwidth, a possible solution is to reduce the complexity in order to serve that user - complexity may be reduced for that user alone while maintaining complexity for other users, or alternatively complexity may also be reduced for other users (e.g. for all (non-priority) users). Alternatively, another possible solution is to relay the user to another node in the content delivery network - however, this may introduce more latency, which is not always preferred.

One or more users may be requesting and consuming different content with different qualities and different spatial and temporal resolution - some of the content may be long tail and may hence have been purged, and may therefore need JITX.

Additionally, in further developed embodiments, a decision may be made whether to delete the transcoded video stream (i.e. the quality requested by the user) or to store it for future use, for example based on a statistical model of the likelihood over time that the same transcoded video stream in the newly requested quality will be requested again.

The required transcoding complexity of the requested video streams may be calculated at any moment in time, for example by means of an input model. Data for such an input model may be provided by for example transcoding hint signals, containing information enabling content-aware mitigation actions, preferably when the transcoding node is or risks running out of transcoding complexity budget. A transcoding hint signal may provide, amongst others, guidance on some instructions for additional local search in order to optimize the transcoding result.

In particular, a transcoding hint signal (also called THS or THS signal) may contain information that is useful to provide hints to a transcoder. These hints may comprise one or more, preferably all, of the following classes of hints: hints as to what prediction data to translate from a reference quality stream (which may require less bits to be encoded than the actual prediction data of the resultant transcoded video stream) - these hints may also be referred to as prediction translation hints; hints on how complex a transcoding refinement (that is, a prediction search technique adaptation) is needed to obtain the same prediction as in the initial stream (which may enable complexity control and awareness of the output intrinsic visual quality) - these hints may also be referred to as transcoding instruction hints; and/or hints on how to adapt quantization parameter information (which may ensure and simplify rate control) - these hints may also be referred to quantization parameter hints.

In order to be able to deal with a user browsing in content and in order to anticipate peaks of transcoding complexity, it may be contemplated to use complexity signatures, that is, streams indicating complexity of frames (or other parts, such as segments) of the video stream. Complexity may in this context be expressed by a suitable measure, such as the required number of operations, FLOPs or a number of CPU cycles, SAD, search window ranges, etc.

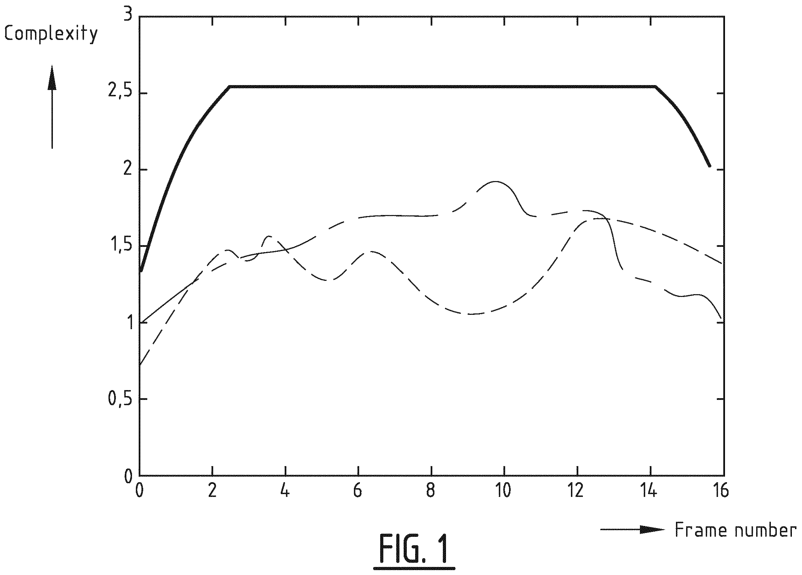

Figure 1 schematically illustrates an example graph over time of complexity of a plurality of video streams to be encoded. The figure shows a first complexity signature of a first video stream (that is, a piece of content) as a regularly striped line and a second complexity signature of a second video stream as an irregularly striped line. The second video stream may for example have a different bitrate and/or a different resolution that the first video stream. The sum of the first and second complexity signatures is shown as a bold line. In this example the complexity signatures may be expressed (on the vertical axis) using an arbitrary measure representing complexity, for example a (normalized) required number of FLOPS (Floating Point Operations Per Second), but it will be understood that other measures for expressing complexity may also be used. The figure shows the complexity signatures over time (on the horizontal axis), expressed in this example as frame numbers of the video streams. The figure further shows that the transcoder node in question has a capped budget - in this example at 2,5 on the complexity measure scale. It follows that for the frames from 2 up to 14, instantaneous complexity requirements for encoding the two video streams exceed the available complexity budget.

Complexity is typically strongly correlated with activity displayed in the content, and even with per-frame bitrate. In order to avoid that mitigation actions reduce intrinsic visual quality in scenes that are difficult to transcode and where intrinsic visual quality is important, such signatures may advantageously be used to anticipate such segments. It is noted that the temporal signature sampling frequency may advantageously be taken into account, as will be explained below.

Signatures of the transcoding complexity per codec, per quality and per GOP, which is the abbreviation of "group of pictures", may preferably be associated with, e.g. stored in, the transcoding complexity model. In case of transcoding hint signal input, the complexity level may be expressed per frame or per GOP. Example measures of expressing complexity may include a number of hints, for example expressed as a class, such as "no extra work", "limited extra work", "average extra work", "high extra work") - it will be understood that complexity may also be expressed by other measures, continuous or discrete, and that the measures need not necessarily be expressed as classes.

Additionally or alternatively, in a further developed embodiment, the complexity signatures may be clustered per content type. For instance, action movies typically display more motion whereas documentaries typically display more camera pan. In other words, the complexity signatures for different content types may differ while different content of a same content type may have a more similar complexity signature.

In a further developed embodiment, the duration of the at least one segment is decreased to a duration higher than a predefined minimum group of pictures length. This allows that the frequency of IDR (Instantaneous Decoding Refresh) frames, which may require more storage, processing and bandwidth, can be kept under control. In yet another further developed embodiment, the duration of the at least one segment is additionally or alternatively increased to a duration lower than a predefined maximum group of pictures length. In this way, it remains possible to change between multiple visual qualities of the video stream(s) without an appreciable delay.

At the ingest during the creation of the transcoding hint signal, complexity may be monitored based on a number of parameters (such as motion vectors, macroblock types, quantization parameter differences, etc.). Based on this monitoring the content may be segmented differently in order to keep relatively more complex parts in one segment and to create longer segments for relatively less complex parts - preferably, this different segmentation may be performed taking into account a size (or an average available size) of a receiver buffer and/or latency requirements of the receiver of the transcoded video stream. Additionally or alternatively, the segment length may be adapted in order to cope with peaks of complexity such that even if some frames cannot be transcoded in real-time, the total number of frames for the segment can still be transcoded in real-time or a combination of segments for different streams for which a joint JITX is likely. Hence the transcoder may spend more time on relatively more complex (and therefore typically visually more important) frames.

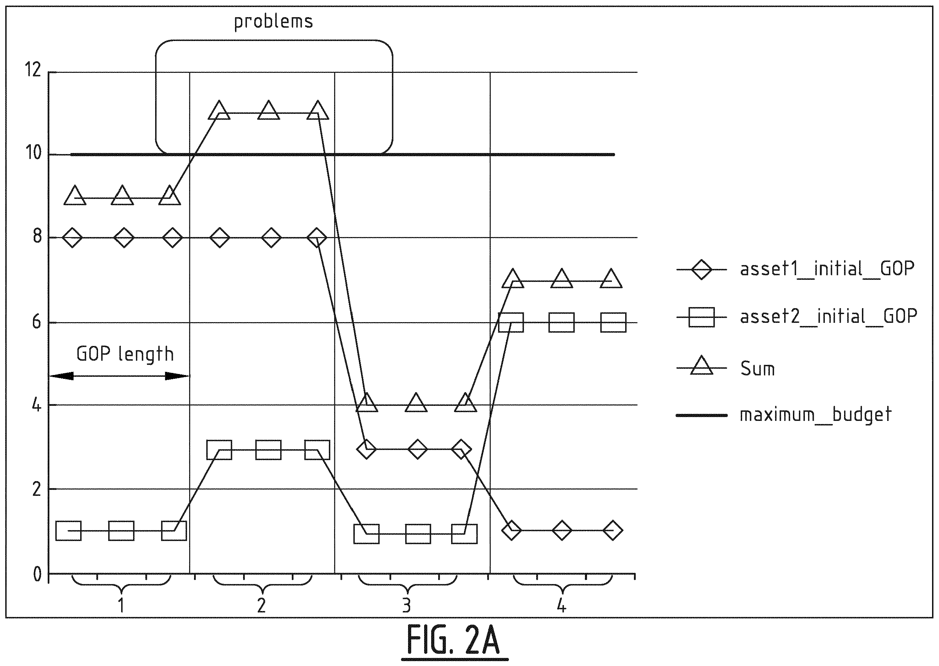

Figures 2A-2B schematically illustrate example problems of summed complexity exceeding a budget for encoding a plurality of video streams, e.g. the video streams of Figure 1. It is to be noted that "complexity" in this context refers to JITX complexity, that is, the computational complexity required for just-in-time transcoding a given video stream.

Figure 2A shows a first complexity signature of a first video stream, denoted "asset1_initial_GOP", and a second complexity signature of a second video stream, denoted "asset2_initial_GOP", as well as the sum of the first and second complexity signatures, with their complexity expressed on the vertical axis. As for Figure 1, the complexity may be expressed (on the vertical axis) using an arbitrary measure - in this example, the measure is for instance chosen different from the measure of Figure 1. On the horizontal axis, time is shown, as a number of segments of the respective video frames of the video streams. The figure shows that the video streams are encoded using a first GOP (Group Of Pictures) length (or size) - in this illustrative example, a GOP length of 3 segments. The figure further shows that there is a (in this case predefined, but this may also be dynamically determined, for example if computational resources are being required for other purposes while the transcoding operation is taking place) maximum budget (shown as a bold line) for complexity, in this example at a complexity of 10. The figure further shows that the sum exceeds the maximum budget, in this particular example, during segment 2. Consequently, the operation may run the risk of failing during this time.

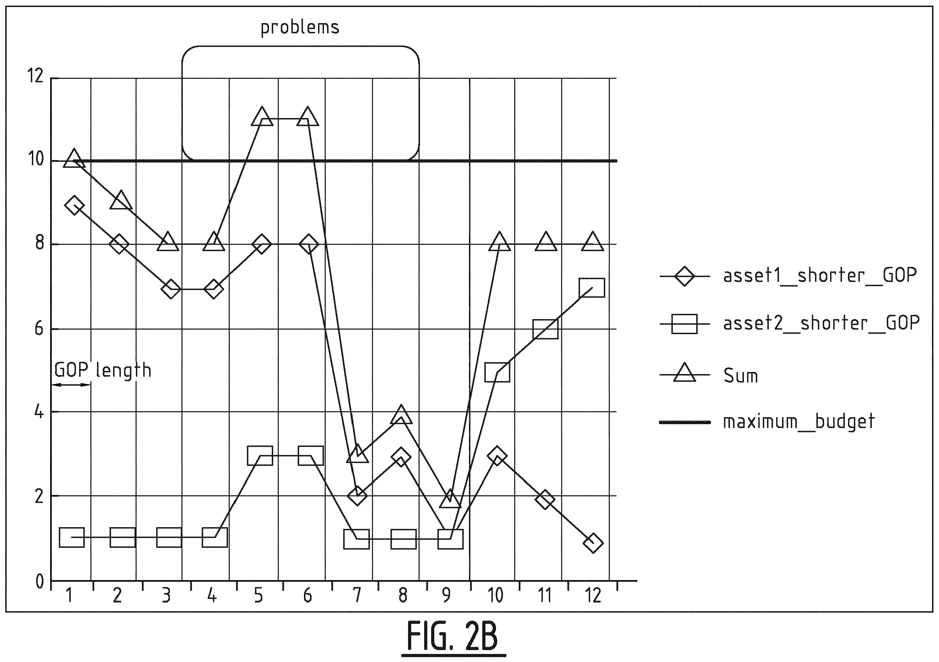

Figure 2B shows another first complexity signature of the first video stream, denoted "asset1_shorter_GOP", and another second complexity signature of the second video stream, denoted "asset2_shorter_GOP", as well as the sum of the other first and the other second complexity signatures, with their complexity expressed on the vertical axis. Figure 2B further differs from Figure 2A in that the GOP length is shorter - in this illustrative example, a GOP length of 1 segment. Because of this shorter GOP length, it follows that the segments for which the sum exceeds the maximum budget are less numerous than for Figure 2A. However, there still occurs a problem for segments 5-6.

In other words, shortening the GOP size may allow to change the complexity. This is based on at least the following two factors: the total load for the machine, and the complexity signature per video stream. This solution may address and even partially solve the problem, because fewer segments incur problems than for Figure 2A.

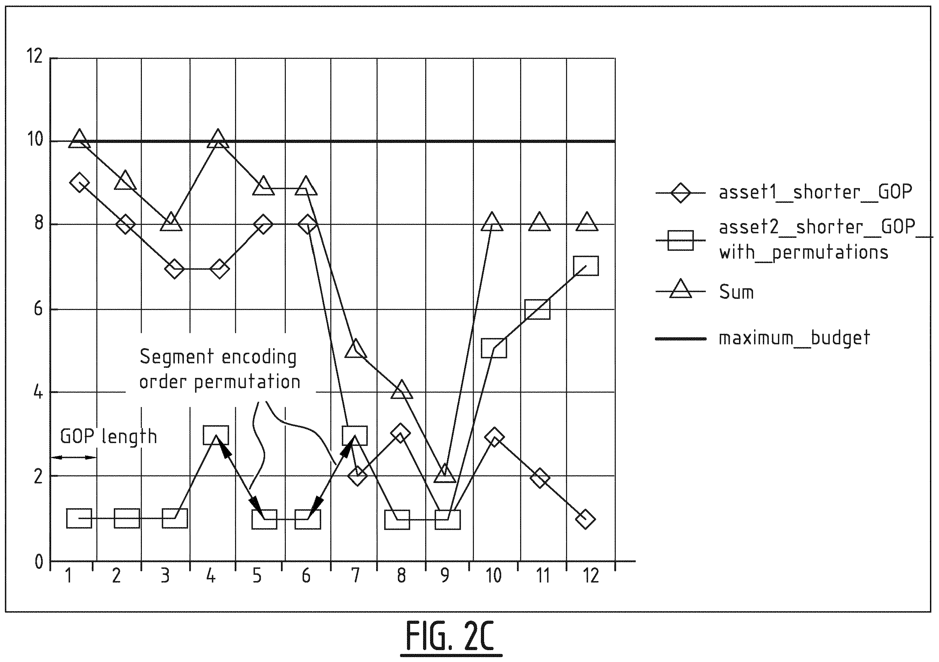

Figure 2C schematically illustrates the result of operation of an embodiment of a system according to the present invention. The figure shows how a GOP length reduction (like in Figure 2B) in combination with an encoder order permutation may be used to address the problem that the sum of the complexity signatures would exceed the maximum budget. In this particular example, by permuting the order of encoding of some of the segments by the encoder, the sum of the complexity signatures may be kept below the maximum budget for all segments, including for segments 5-6. This embodiment, with the GOP size reduction combined with changes in the segment encoding order, may thus address the problem of Figure 2A and may even resolve the problem entirely, because no segments (in this example) incur the problems. Moreover, this embodiment may even help to guarantee quality of experience for the users (since the maximum budget has not been exceeded in the illustrated example).

In this embodiment, in order to adapt the GOP size and to adapt the segment encoding order, the complexity control module instructs the transcoder on which reference segment it has to decode (for example: trick play instructions, one segment forward, or in case the segment length is shortened a given frame number in a given reference segment) and which part of the THS needs to be parsed (analogously to the decoding), and instructs the segmentation module on the segment size, segment number and correct timestamp (based on the encoding-ordering) to be added to the encoded GOP inside the segment, so that playout remains correct. Moreover, the corresponding manifest file is preferably updated to include the new segment sizes, numbers and optionally the initial timestamp (playout time).

In a further developed embodiment, if the GOP length for at least one segment of a video stream has been adapted, a manifest file associated with the at least one video stream may be adapted, in order to take account of the adapted duration. A benefit of adapting the manifest file is that a receiving buffer at the client side (i.e. the requesting user's side) can determine how many seconds of content are loaded, based on the number of frames or segments it has.

In another further developed embodiment, the duration of the at least one segment is decreased to a duration higher than a predefined minimum group of pictures (GOP) length. This is advantageous, because for too short GOP lengths (GOP lengths less than the predefined minimum GOP length), more IDR (Instantaneous Decoding Refresh) frames are needed. In other words, a minimum GOP length may be predefined, below which the duration of the at least one segment is not to be decreased. In yet another further developed embodiment, a maximum value for the GOP length may additionally or alternatively be set, in order to still enable fast transitions between qualities - if a GOP length is too long, changing from one quality to another may lead to many prediction artefacts, as there is too much delay between intra frames.

From the above, it may follow that an adaptive streaming repository will have different ABR (Adaptive BitRate) sources or can evolve depending on what complexity is affordable. In addition the generation of the transcoding hint signals can be hinted by feedback by the system. Moreover, it is possible to provide multiple transcoding hint signals per quality in function of the JITX complexity. The transcoding hint signals inherently allow to control the complexity.

In an alternative embodiment, machine learning techniques (for example Convolutional Neural Networks) can be used in order to optimize the transcoding complexity for various peak JITX demands over time. An embodiment of a system according to the present invention may learn to optimize itself in order to better predict the consequences of the adaptations in terms of visual output, whereby the model is enriched to include intrinsic visual quality information depending on the selected transcoding complexity or provide an array with number of tuples with different {transcoding complexity-video quality} options. The model will take also the demand curve across time into account. This may advantageously help control the granularity of the transcoding.

In this embodiment, the adaptive streaming catalogue may evolve, which may provide a finer granularity in output intrinsic visual quality depending on the available capacity of the transcoding complexity The embodiment may be configured to learn from several test sequences representative of content categories such as series, movies, which have been transcoded with different complexities as stated by their transcoding hint signals and for which perceived intrinsic visual quality (e.g. MOS) has been determined, for example automatically or by users. Based on the content category it is therefore possible to predict from transcoding hint signal information, content signatures, and used transcoding complexity operational points what will be the impact on the MOS score for the output video. Adaptations can then for example be selected by optimizing the MOS score for all users given a total complexity constraint for stream, for each minimal segment length.

In various embodiments, the system may be configured to take into account the intrinsic visual quality of any inserted advertisement segments for which a complexity signature can be determined, in order to keep an equal overall quality of experience for the user.

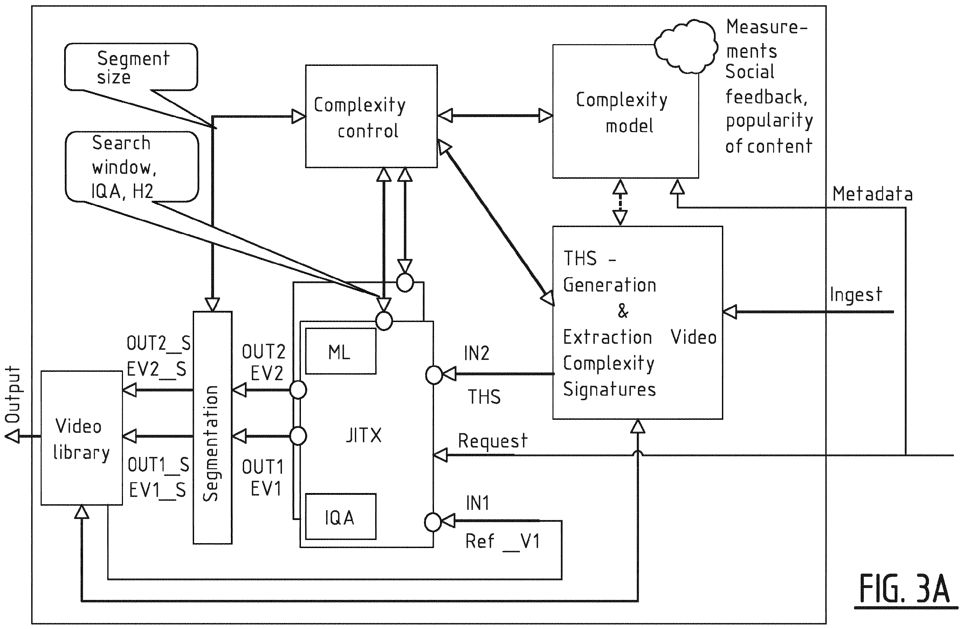

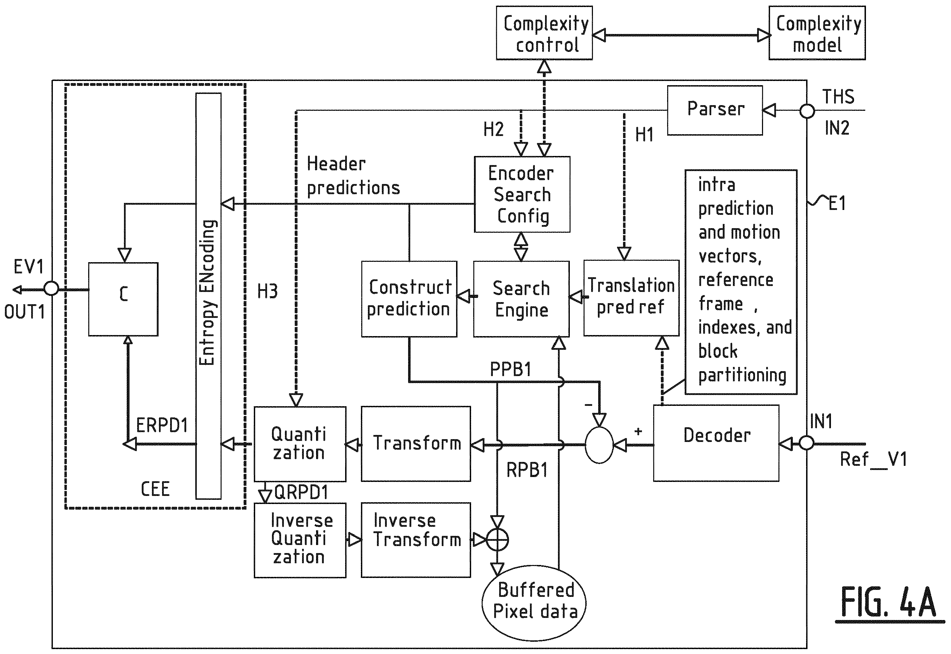

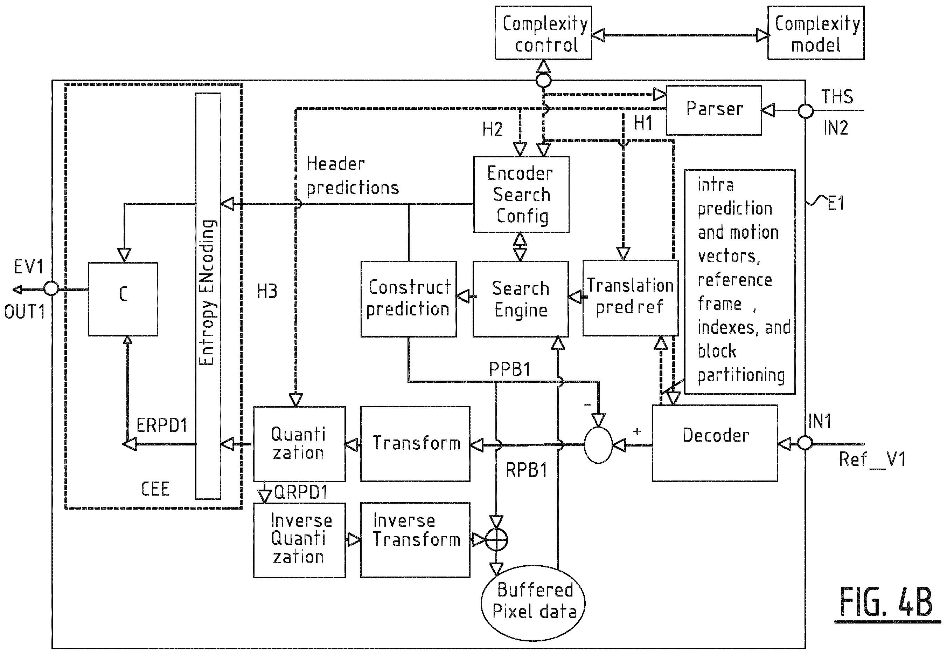

Figure 3A schematically illustrates an embodiment of a system which results in output as shown in Figure 2C. Such a system comprises a transcoder JITX (which will be further briefly described with reference to Figures 4A and 4B), which comprises an optional machine learning module ML and a perceptual image quality assessment module IQA. The system further comprises a complexity control module, which is connected to a complexity model which may for example be stored in the transcoder JITX or centrally. The complexity model may take into account measurements of social feedback and of the popularity of particular content, as will be discussed below.

From the ingest at the head-end the transcoding hint signals are being generated (denoted THS-Generation) and during the decoding necessary for the transcoding hint signals generation, the complexity signatures of the corresponding video streams may be determined (denoted "Extraction Video Complexity Signatures"). The complexity signatures together with the levels of complexity controlled by the transcoding hint signal may be fed to the complexity model. After the transcoding hint signal has been created for each ABR variant, the video library may be purged from all its ABR qualities except for the reference quality, as discussed above. If a user at some point requests an instant transcoding of a video, the JITX will be controlled by the transcoding hint signal while assessing the perceptual image quality (as an intrinsic visual quality) in the perceptual image quality assessment module (IQA) - for example as described in the following publication by V. Laparra et al., "Perceptual image quality assessment using a normalized Laplacian pyramid," Proc. IS&T Int'l Symposium on Electronic Imaging: Conf. on Human Vision and Electronic Imaging, Feb 14-18, 2016, San Francisco - or alternatively MS-SSIM (Multi-Scale Structural Similarity), PSNR (Peak Signal-to-Noise Ratio), etc.

The whole JITX transcoding process may be overseen by a complexity control block which is configured for monitoring the complexity capacity for example per node, per virtual machine, etc. The complexity control module (or a control parameter adapting module (not shown) of the complexity control module) may for example control (e.g. adapt) the search window, the perceptual image quality (as an intrinsic visual quality), the GOP size and transcoding instruction hints H2 for the transcoder JITX. The transcoder JITX may use transcoding instruction hints H2 included in the transcoding hint signal THS input to the transcoder JITX via a second input terminal IN2 and may also use the complexity model. The latter may in a further developed embodiment be optimized by means of machine learning in the machine learning module (ML) or fitting in a convolutional neural network (CNN) which is configured to optimize the IQA for an acceptable level of complexity as decided by the complexity control module.

The transcoder JITX may transcode an input video stream in a reference quality Ref_V1, input to the transcoder JITX via a first input terminal IN1 (which may be coupled to a video library storing the input video stream in the reference quality Ref_V1), and output an encoded video output EV1 from an output terminal OUT1, as will be further described with reference to Figures 4A and 4B. Moreover, the encoded video output EV1 may be segmented (that is, prepared for transport) in a segmentation module, based on segment size information provided by the complexity control module. The segmentation module may output a segmented encoded video output EV1_S (using its output terminal OUT1_S), to the video library, from where video streams may be output to the user who requested them. Optionally, if extra transcoders are available, then output encoded video streams EV2 from their respective output terminals EV2 may also be segmented as segmented encoded video output EV2_S using their respective output terminals OUT2_S, and provided to the video library analogously.

It is to be noted that the THS-Generation as well as the transcoding complexity cost are specific to any of the type of JITX requests. In a particular exemplary embodiment, the following three types may be distinguished:
1. Based on the history of previous requests made by the same user or device, it may be determined what kinds of connections and/or codecs are likely to be supported by the user or device. Moreover, in a further developed embodiment, it may also be determined what type or genre of content the user has previously consumed, for example in order to provide a just-in-time transcoding categorization of users;
2. Also, a particular codec, such as the codec H.264, wherein the video stream has either a high spatial resolution and/or framerate or a low spatial resolution and/or framerate may be transcoded to the same codec H.264, in other words a same-codec one-to-one mapping.
3. Also, transcoding may be performed between different codecs - for example, if computational resources (CPU, central processing unit, or GPU, graphical processing unit) are scarce and if the user requests a high profile or higher resolution HEVC transcoding, transcoding may be from HEVC to H.264 and/or from H.264 high profile to baseline if the user's device supports that. Moreover, referring to the above first point, the history and type of requests of the user may be used to predict the resultant bitrate of such a transcoding.

Furthermore, the average complexity cost per block (that is, a predefined spatial region of the video stream) may be determined in the THS-Generation over frames or groups of pictures (GOPs).

In another, further developed embodiment, wherein an embodiment of a transcoder according to the present invention is situated at an Origin Server (that is, a server storing an original copy of a video stream), and wherein a user requests that video stream from a CDN node connected to that Origin Server, it may be considered to provide a feedback loop from a CDN node towards an Origin Server, in order to serve the user's request (for transcoding the video stream) as well as any metadata associated with the user's request to the Origin Server. Such metadata may preferably also be used to update a complexity model for use in various embodiments according to the present invention.

Such a feedback loop may have multiple functions, such as the following:
- propagating user requests for long tail content;
- propagating statistics on interrelations between users of content which is being consumed before the content is being purged;
- propagation of statistics on how people zap (i.e. quickly move) through the content, wherein it may be contemplated that the complexity of the interesting parts should be kept;
- it is known that the more on-line referrals, social media mentions, positive reviews, etc., that a piece of content in the long tail gets, the higher the chances are that that piece of content will be requested again. Moreover, referrals may for be to specific parts (that is, scenes) of a video stream, which may also be taken into account.

Additionally, the demand behaviour for a piece of long tail content may be influenced by such things as an upcoming anniversary of an artist or actor, etc., which may therefore advantageously also be added to the model.

It will be understood that other architectures may be contemplated; for example, the transcoder may be situated at the CDN node, or may be situated at another node different from the Origin Server and from the CDN node.

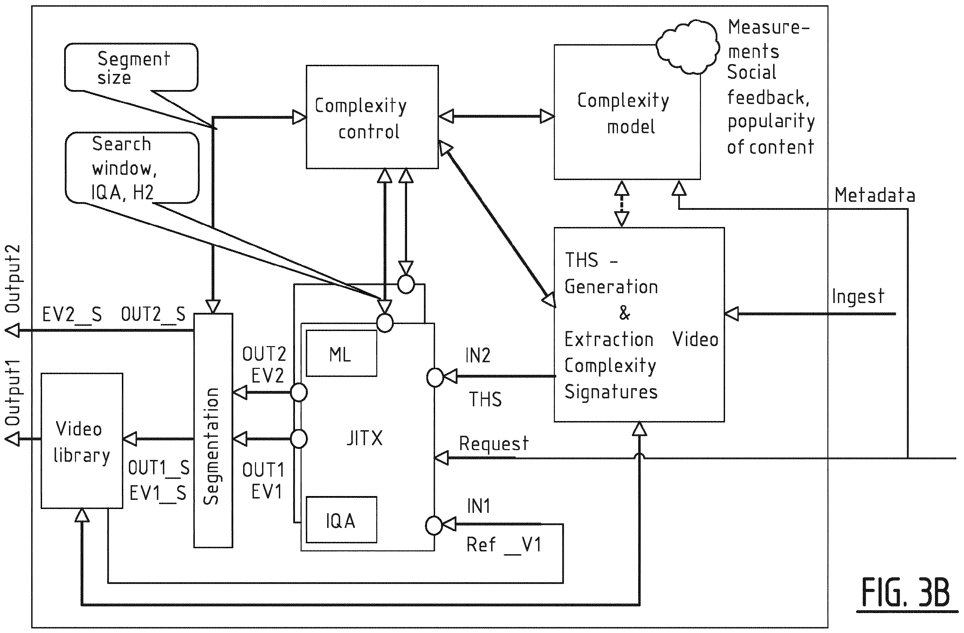

Figure 3B schematically illustrates another embodiment of such a system differing from the embodiment of Figure 3A in that the segmented encoded video output EV2_S from the respective output terminal(s) OUT2_S of the one or more optionally extra available transcoders may be directly output, denoted Output2, to the user(s) who requested it/them, aside from the output to the user as in Figure 3A, denoted Output1 in this figure for pictorial convenience.

To better explain the operation and purpose of the complexity control module, a brief description of the operation of the transcoder which is controlled by this complexity control module is now provided. Note that the main operation of the transcoder itself is described an a patent application filed by the same application on the same day as this patent application.

Figure 4A schematically illustrates a transcoder embodiment E1 enabled to be controlled by a complexity control module according to the present invention. This transcoder embodiment E1 includes a first input terminal, denoted INI, configured for receiving an input video stream, denoted Ref_V1, The embodiment E1 further comprises an additional input terminal, denoted IN2, configured for receiving a Transcoding Hint Signal, denoted THS. Structural and functional details of the THS are described above. The THS is provided to a parser, which is configured for extracting from the THS its transcoding instruction hints.

As shown in the figure , E1 further comprises a decoder configured for decoding the reference input video stream Ref_V1, in order to produce pixel data and prediction data (for example such as intra prediction and motion vectors, reference frame indexes, and block partitioning).

In summary, based on the input encoded video stream Ref_V1 of a given reference quality, and based on the corresponding THS for another desired quality, an encoded output video stream EV1 of the other desired quality may be generated by such a transcoder.

This transcoder, more in particular the encoder search configuration module thereof, is controlled by the control signal from the complexity control module . The complexity control module is configured for further controlling the encoder search configuration module based on the hints extracted from the THS. In particular, if the THS comprises multiple transcoding instruction hints representing a plurality of different prediction search technique refinements (for example, different adaptation of the search space of the prediction search technique), the complexity control module may be configured to adapt these according to a predefined policy, or on the fly.

It is to be remarked that in the embodiments of Figure 4A the coupling between the transcoder and the complexity control module is bi-directional. This enables the transcoder, more in particular the encoder search configuration module in this particular embodiment to provide feedback to the complexity control module, concerning parameters for example related to intrinsic visual quality measured by SAD in the Search Engine per block or averaged per slice or frame, decoder and/or parser errors and complexity cost (for example execution time), etc. However in other embodiments the transcoder just received control information from the complexity control module, as described in a previous paragraph.

Figure 4B schematically illustrates another embodiment of a transcoder which differs from the embodiment of Figure 4A in that the complexity control module provides a control signal which controls not only the encoder search configuration module, but also to the parser and to the decoder modules. This control of the complexity control module to the decoder module of the transcoder enables the complexity control module to instruct the decoder with commands enabling the decoder to decode frames of the input reference quality according to a new selected output GOP size (as well as forward or backwards navigation commands) for example. Similarly, the control from the complexity control module to the THS parser module of the transcoder enables to parse the information contained in the THS corresponding to the decoded frames at the decoder module when the decoder is instructed for an output GOP size modification (as well as forward or backwards navigation commands) for example, in accordance with this control signal. This control information, being the GOP size modification in this example is also transmitted as part of this control signal provided by the complexity control module to the Encoder Search Config module, as described in the embodiment illustrated on Figure 4a, which prepares headers and coding instructions according to the instructed output GOP size, such as corrected reference lists, slice types etc.

In the embodiments of Figure 4A-B, the transcoder is also adapted to provide feedback to this control module. These transcoders are thus adapted to receive control signals from the control module, and to provide feedback information back to the complexity control module such as for example, execution times from the decoder, THS parser and Encoder Search Config modules, decoding errors from the decoder, parsing errors from the THS parser, and from the Encoder Search Config module computed prediction block (or averaged on a slice or frame) SAD (or other intrinsic quality metrics), ratios between the chosen motion vectors length and the instructed search window, transcoding complexity measures statistics (including module or thread complexity), transcoding coding statistics etc., to the complexity control module. However other embodiments are possible with only a uni-directional control input from complexity control module to the transcoder.

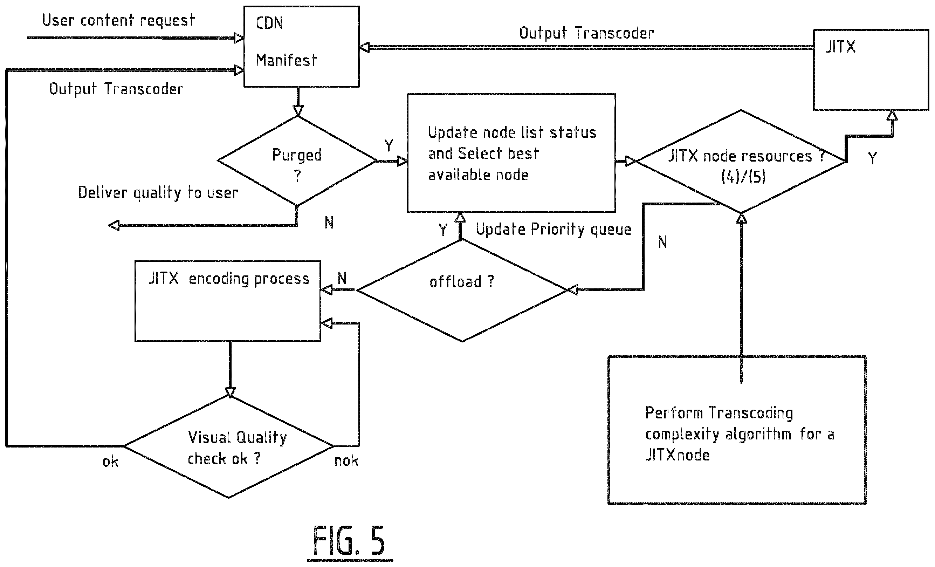

Figure 5 schematically illustrates a flowchart of an embodiment of a method according to the present invention. A user requests content, for example a video stream in a particular quality, which is not available, but is available in a reference quality. The request is made of a content delivery network, CDN, storing a manifest file indicating how the video stream is stored in the CDN. If the requested particular quality is not purged, that particular quality is delivered to the user. Else, a node list status is updated and a best available node (i.e. a transcoder) is selected. Next, the JITX node resources are analysed (reference to steps (4) and (5), as explained below), by performing a transcoding complexity (control) algorithm for the JITX node, according to an embodiment of the method of the present invention. If there are sufficient JITX node resources (option "Y"), the JITX transcoder transcodes the video stream into the requested particular quality. Else, it is decided whether or not to offload the request (i.e. assign the transcoding request to another node). If this is decided so (option "Y"), a priority queue is updated in order to adapt the node list status and to allow to select the best available node later on. If it is decided not so (option "N"), the JITX transcoder performs its encoding process, i.e. transcodes the requested video stream into the requested particular quality. If a visual quality check of this transcoded video stream shows that it is sufficient (option "ok"), this output of the transcoder is provided via the CDN to the requesting user. Else (option "nok"), the JITX transcoder transcodes the video stream again and the procedure is repeated.

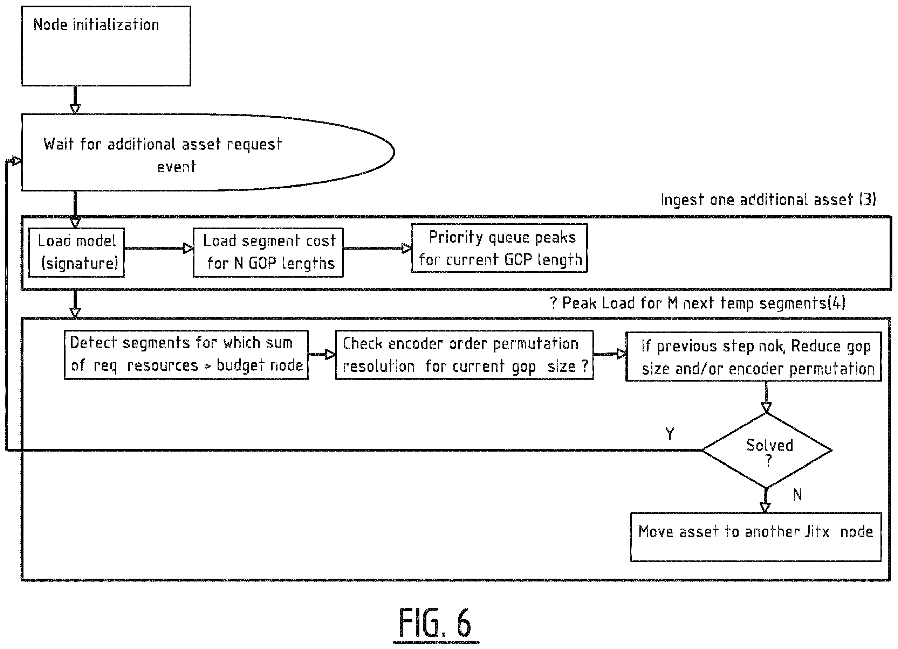

Figure 6 schematically illustrates a flowchart of an embodiment of a method according to the present invention. In particular, the figure illustrates temporal segment duration reduction. The following description of the flowchart will refer to numbered steps to describe the illustrated operations.
1) Node initialization, i.e. initialize the JITX transcoder, move to 2);
2) Wait for additional asset request event, i.e. wait until a user requests an asset such as a video stream in a different quality than a stored reference quality; if triggered move to 3);
3) Ingest one additional asset;
   a. Load model (signature), i.e. determine a complexity signature of the video stream;
   b. Load segment cost for N GOP lengths, i.e. determine the complexity cost requirements for using a GOP length of N, wherein N is a predetermined integer;
   c. Priority queue peaks for the currently chosen GOP length, i.e. an analysis of complexity peaks within a GOP, as in the following steps different segment lengths may be considered, in order to adapt the GOP length and/or to reorder GOPs (while maintaining playout order of the video stream) - in other words, peaks in the complexity signature may be determined, because such peaks may negatively impact computational load, and may preferably be put into a priority queue in order to determine when they can be encoded safely (i.e. without risking high impact on the computational load);
   d. Move to 4);
4) Check Peak Load for M next temporal segments (e.g. using a forward looking window over upcoming segments of the video stream), wherein M is a predetermined integer;
   a. Detect problematic segments for which a sum of required complexity resources is superior to (i.e. peaks over) the current complexity budget of the corresponding node;
   b. Check if a segment encoding order permutation (i.e. permuting the order in which the respective segments are to be encoded) would solve the peak sum issues, for the currently selected GOP size;
   c. If the outcome of the previous check is negative (denoted "If previous step nok"), and if there are still available GOP sizes;
      i. Attempt to reduce the GOP size further and/or check whether another encoder permutation would solve the peak sum issues;
   d. If the outcome remains negative (option "N") and if there are no further available GOP sizes, then move the last asset to a different node and set the present node as fully loaded - in an alternative embodiment, copies of the asset in one or more different qualities may be stored for future use if they are requested in the future instead of having to then transcode them just-in-time by the JITX transcoder (see above with reference to Figures 3A and 3B), for example as an optimization if it is predicted (e.g. using a complexity model) that demands on the JITX transcoder posed during a period will be higher than a threshold;
   e. Else if the outcome is positive (option "Y"), i.e. the peak sum issue is solved, move to 2), i.e. return to a waiting state for a next asset request event.

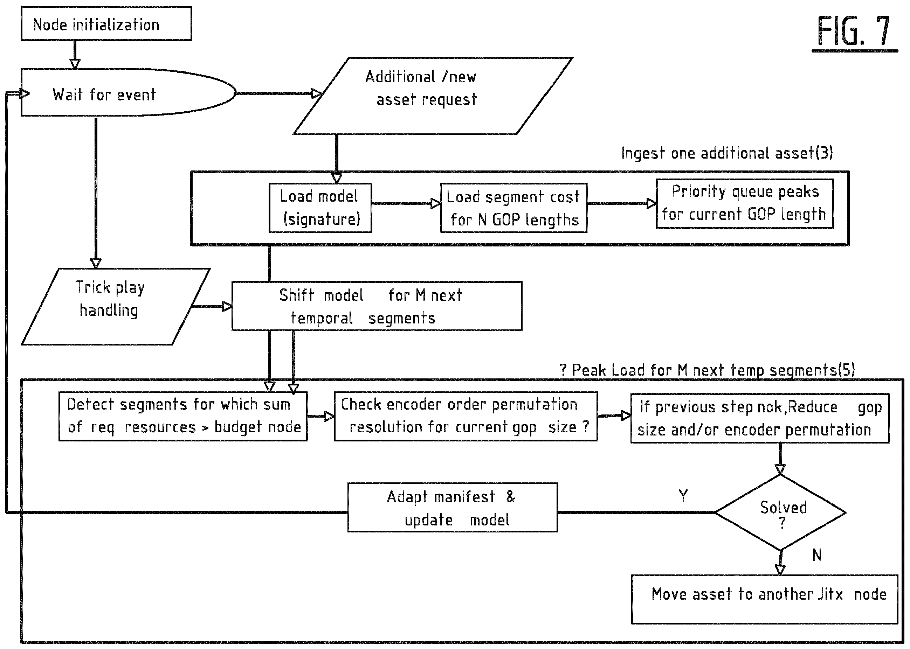

Figure 7 schematically illustrates a flowchart of an embodiment of a method according to the present invention. In particular, the figure illustrates temporal segment duration reduction and so-called trick play, i.e. forwarding or rewinding a playing video stream. Figure 7 corresponds in part to Figure 6, and it will be understood that corresponding descriptions may be omitted. Again, the following description of the flowchart will refer to numbered steps to describe the illustrated operations.
1) Node initialization, move to 2);
2) Wait for event, i.e. wait until a user requests an asset, such as a video stream in a different quality than a stored reference quality. If a new or additional asset is requested, move to 3), else if a trick play is triggered, move to 4);
3) Ingest one additional asset, as above for Figure 6;
   a. Load model (signature);
   b. Load segment costs for N GOP lengths;
   c. Priority queue peaks for the currently chosen GOP length;
   d. Move to 5);
4) Trick play handling (i.e. ensure that trick play is correctly responded to, for example using an event-based operation);
   a. Shift model for M next temporal segments, analogous to step 4) in the discussion above with referenced to Figure 6;
   b. Move to 5);
5) Check Peak Load for M next temporal segments (e.g. using a forward looking window), as above for Figure 6;
   a. Detect problematic segments for which a sum of required complexity resources is superior to the current complexity budget of the corresponding node, as above for Figure 6;
   b. Check if a segment encoding order permutation would solve the peak sum issues, for the currently selected GOP size, as above for Figure 6;
   c. If the outcome of the previous check is negative and if there are still available GOP sizes , as above for Figure 6;
      i. Attempt to reduce the GOP size further and check whether another encoder permutation would solve the peak sum issues, as above for Figure 6;
   d. If the outcome remains negative and if there are no further available GOP sizes, then move the last asset to a different node and set the present node as fully loaded, as above for Figure 6;
   e. Else if the outcome is positive, move to 2), as above for Figure 6.

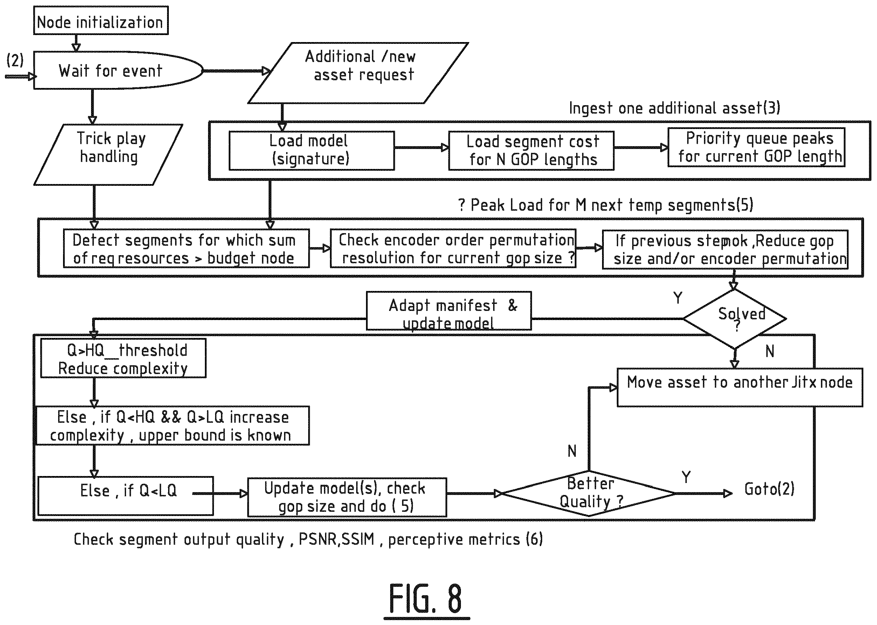

Figure 8 schematically illustrates a flowchart of an embodiment of a method according to the present invention. In particular, the figure illustrates temporal segment duration reduction and trick play, like Figure 7, and quality optimization. It will be understood that descriptions corresponding to Figure 6 and 7 may be omitted. Again, the following description of the flowchart will refer to numbered steps to describe the illustrated operations.
1) Node initialization, move to 2);
2) Wait for event, as above for Figure 7. If a new or additional asset is requested move to 3), else if a trick play is triggered, move to 4);
3) Ingest one additional asset, as above for Figure 7;
   a. Load model (signature);
   b. Load segment costs for N GOP lengths;
   c. Priority queue peaks for the currently chosen GOP length;
   d. Move to 5);
4) Trick play handling (event based), as above for Figure 7;
   a. Shift model for M next temporal segments;
   b. Move to 5);
5) Check Peak Load for M next temporal segments (e.g. using a forward looking window), as above for Figure 7;
   a. Detect problematic segments for which a sum of required complexity resources is superior to the current complexity budget of the corresponding node;
   b. Check if a segment encoding order permutation would solve the peak sum issues, for the currently selected GOP size, as above for Figure 7;
   c. If the outcome of the previous check is negative and if there are still available GOP sizes,;
      i. Attempt to reduce the GOP size further and check whether another encoder permutation would solve the peak sum issues;
   d. If the outcome remains negative and if there are no further available GOP sizes, then move the last asset to a different node and set the present node as fully loaded, as above for Figure 7;
   e. Else if the outcome is positive, move to 6), different from the situation of Figure 7;
6) A difference with the situation of Figure 7 is as follows: Check segment output intrinsic visual quality (e.g. using PSNR, SSIM, perceptual metrics, or the like);
   a. If they are above a predefined high_quality_threshold, then reduce the encoding configuration complexity;
   b. Else if they are below the predefined high_quality_threshold and above a predefined low_quality_threshold, then increase the encoding parameter complexity;
   c. Else if they are below the low_quality_threshold, then move the last asset to a different node;
   d. Update the used model or models, and check whether the current GOP size and encoding order as decided in 5) are still possible;
   e. If they are still possible, then update the encoder configuration and move to 2); else move the last asset to a different node.

In a specific exemplary embodiment, the JITX transcoder according to the present invention may be run on a GPU-CPU architecture. If, on peak demand and after complexity has been optimized, the GPU is fully loaded, the JITX transcoder may be initialized on the CPU. The latter may for example be organized using virtual machines (VM), Docker containers, unikernels, etc. which may be spawned in a local or remote manner. In other words, the JITX transcoding and its complexity may be decentralized and some of it, if not all of it, may also be distributed to a CDN node instead of an Origin server.

In a preferred embodiment, the optimization of the JITX transcoding complexity may be solved as an Integer Linear Programming problem, which technique is well-known to the skilled person.

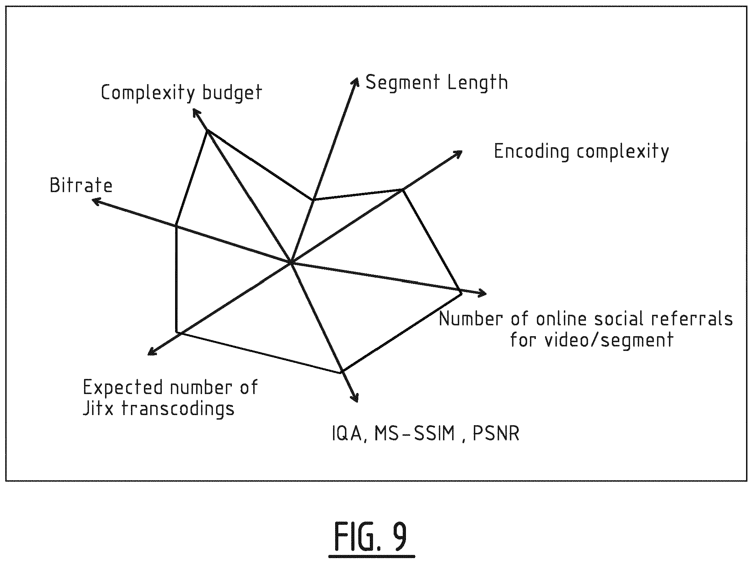

Figure 9 illustrates an example of an optimization trade-off for an embodiment of a method according to the present invention. In this particular example, a number of optimization factors are taken into consideration when determining whether or not to increase complexity by adapting the at least one control parameter of the transcoding. The factors may for example include the complexity budget (e.g. a predefined or dynamically determined complexity threshold), the bitrate, an expected number of JITX transcoding operations, such intrinsic visual quality scores as IQA, MS-SSIM, PSNR, etc., the number of online social referrals for a given video or video segment, the encoding complexity, and/or the segment length.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for controlling transcoding of at least one video stream (Ref_V1) from a reference quality into at least one different quality; the method comprising:
- determining at least one respective complexity signature of the at least one video stream, wherein said at least one respective complexity signature is representative of a required number of transcoding processing operations for respective segments of the at least one video stream, said respective segments having a predetermined group of pictures (GOP) length;
- determining complexity requirements for transcoding the at least one video stream from the reference quality into the at least one different quality, based on the determined at least one respective complexity signature, using said predetermined GOP length;
- comparing the determined complexity requirements to a complexity threshold; and
- if it is found that the determined complexity requirements exceed the complexity threshold, adapting at least one control parameter (Search window, IQA, H2) of the transcoding for controlling complexity such that said determined complexity requirements are kept below said complexity threshold;
**characterized in that** the adapting of the at least one control parameter of the transcoding comprises adapting an encoding order of at least one segment of the respective segments of the at least one video stream to be transcoded by permuting said encoding order of said at least one segment with an encoding order of at least another segment of the respective segments of the at least one video stream to be transcoded.

2. The method of claim 1, wherein the complexity requirements are further determined based on at least one transcoding hint signal (THS) associated with the at least one different quality of the video stream, the at least one transcoding hint signal comprising at least one hint of at least one of the following:
- a prediction data translation hint for translating prediction data of the video stream in the reference quality into the at least one different quality;
- a quantization parameter hint configured for specifying at least one quantization parameter to be used for encoding at least one predefined spatial region of the video stream in the at least one different quality; and
- a transcoding instruction hint (H2) for extending a prediction search technique for encoding the video stream into the at least one different quality, associated with a complexity cost of performing the respective extended prediction search technique; wherein adapting the at least one control parameter comprises adapting a prediction search technique based on the transcoding instruction hint.

3. The method of claim 1 or 2, wherein adapting the at least one control parameter comprises adapting the GOP length of at least one segment of the respective segments of the at least one video stream to be transcoded.

4. The method of claim 3, comprising adapting a manifest file associated with the at least one video stream in order to take account of the adapted GOP length.

5. The method of any one of the claims 3-4, wherein the GOP length of the at least one segment is decreased to a GOP length higher than a predefined minimum GOP length and/or wherein the GOP length of the at least one segment is increased to a GOP length lower than a predefined maximum GOP length.

6. The method of any one of the claims 1-5, comprising consulting a machine learning prediction module comprising a neural network, preferably a convolutional neural network (CNN), configured for associating the at least one control parameter with a predicted intrinsic visual quality of the at least one video stream in the at least one different quality, in order to adapt the at least one control parameter; wherein the neural network has been trained based on a plurality of reference video streams each transcoded using a plurality of different control parameters of different complexities, and based on a corresponding plurality of preferably automatically determined intrinsic visual quality scores due to using the plurality of different control parameters.

7. A system for controlling a transcoder (JITX) for transcoding of at least one video stream (Ref_V1) from a reference quality into at least one different quality; the system comprising:
- a complexity module (Extraction Video Complexity Signatures) configured for determining at least one respective complexity signature of the at least one video stream, wherein said at least one respective complexity signature is representative of a required number of transcoding processing operations for respective segments of the at least one video stream, said respective segments having a predetermined group of pictures (GOP) length;
- a complexity control module (Complexity Control) configured for determining complexity requirements for transcoding the at least one video stream from the reference quality into the at least one different quality, based on the determined at least one respective complexity signature, using said predetermined GOP length;
- a comparing module configured for comparing the determined complexity requirements to a complexity threshold; and
- a control parameter adapting module (Complexity Control) configured for, if it is found that the determined complexity requirements exceed the complexity threshold, adapting at least one control parameter (Search window, IQA, H2) of the transcoding for controlling complexity such that said determined complexity requirements are kept below said complexity threshold;
**characterized in that** the control parameter adapting module is configured for adapting the at least one control parameter by adapting an encoding order of at least one segment of the respective segments of the at least one video stream to be transcoded by permuting said encoding order of said at least one segment with an encoding order of at least another segment of the respective segments of the at least one video stream to be transcoded.

8. The system of claim 7, wherein the complexity control module is further configured for determining the complexity requirements determined based on at least one transcoding hint signal (THS) associated with the at least one different quality of the video stream, the at least one transcoding hint signal comprising at least one hint of at least one of the following:
- a prediction data translation hint for translating prediction data of the video stream in the reference quality into the at least one different quality;
- a quantization parameter hint configured for specifying at least one quantization parameter to be used for encoding at least one predefined spatial region of the video stream in the at least one different quality; and
- a transcoding instruction hint (H2) for extending a prediction search technique for encoding the video stream into the at least one different quality, associated with a complexity cost of performing the respective extended prediction search technique; wherein adapting the at least one control parameter comprises adapting a prediction search technique based on the transcoding instruction hint.

9. The system of any one of the claims 7-8, wherein the at least one control parameter adapting module is further configured for adapting the at least one control parameter by adapting the GOP length of at least one segment of the respective segments of the at least one video stream to be transcoded.

10. The system of claim 9, further configured for adapting a manifest file associated with the at least one video stream in order to take account of the adapted GOP length.

11. The system of any one of the claims 9-10, wherein the at least one control parameter adapting module is further configured for decreasing the GOP length of the at least one segment to a GOP length higher than a predefined minimum GOP length and/or for increasing the GOP length of the at least one segment to a GOP length lower than a predefined maximum GOP length.

12. The system of any one of the claims 7-11, comprising a machine learning prediction module comprising a neural network, preferably a convolutional neural network (CNN), configured for associating the at least one control parameter with a predicted intrinsic visual quality of the at least one video stream in the at least one different quality; wherein the neural network is configured for being trained based on a plurality of reference video streams each transcoded using a plurality of different control parameters of different complexities, and based on a corresponding plurality of preferably automatically determined intrinsic visual quality scores due to using the plurality of different control parameters; and wherein the system is configured for consulting the machine learning prediction module in order to adapt the at least one control parameter.

13. A computer program product comprising a computer-executable program of instructions for performing, when executed on a computer, the steps of the method of any one of claims 1-6.

## Patentansprüche

1. Verfahren zum Steuern des Umcodierens mindestens eines Videostroms (Ref_V1) von einer Referenzqualität in mindestens eine andere Qualität; wobei das Verfahren Folgendes umfasst:
- Bestimmen mindestens einer entsprechenden Komplexitätssignatur des mindestens einen Videostroms, wobei die mindestens eine entsprechende Komplexitätssignatur eine erforderliche Anzahl von Umcodierungsverarbeitungsoperationen für entsprechende Segmente des mindestens einen Videostroms repräsentiert, wobei die entsprechenden Segmente eine vorgegebene Bildergruppenlänge (GOP-Länge) besitzen;
- Bestimmen von Komplexitätsanforderungen zum Umcodieren des mindestens einen Videostroms von der Referenzqualität in die mindestens eine andere Qualität auf der Grundlage der bestimmten mindestens einen entsprechenden Komplexitätssignatur unter Verwendung der vorgegebenen GOP-Länge;
- Vergleichen der bestimmten Komplexitätsanforderungen mit einem Komplexitätsschwellenwert und
- dann, wenn festgestellt wird, dass die bestimmten Komplexitätsanforderungen den Komplexitätsschwellenwert überschreiten, Anpassen des mindestens einen Steuerparameters (Suchfenster, IQA, H2) des Umcodierens zum Steuern der Komplexität derart, dass die bestimmten Komplexitätsanforderungen unter dem Komplexitätsschwellenwert gehalten werden;
**dadurch gekennzeichnet, dass** das Anpassen des mindestens einen Steuerparameters des Umcodierens ein Anpassen einer Codierungsreihenfolge des mindestens einen Segments der entsprechenden Segmente des mindestens einen Videostroms, der umcodiert werden soll, durch Permutieren der Codierungsreihenfolge des mindestens einen Segments mit einer Codierungsreihenfolge mindestens eines weiteren Segments der entsprechenden Segmente des mindestens einen Videostroms, der umcodiert werden soll, umfasst.

2. Verfahren nach Anspruch 1, wobei die Komplexitätsanforderungen ferner auf der Grundlage mindestens eines Umcodierungshinweissignals (THS), das der mindestens einen anderen Qualität des Videostroms zugeordnet ist, bestimmt werden, wobei das mindestens eine Umcodierungshinweissignal mindestens einen Hinweis mindestens eines der Folgenden umfasst:
- einen Vorhersagedatenumsetzungshinweis zum Umsetzen von Vorhersagedaten des Videostroms in der Referenzqualität in die mindestens eine andere Qualität;
- einen Quantisierungsparameterhinweis, der zum Festlegen mindestens eines Quantisierungsparameters, der zum Codieren mindestens eines vordefinierten räumlichen Bereichs des Videostroms in der mindestens einen anderen Qualität verwendet werden soll, konfiguriert ist; und
- einen Umcodierungsanweisungshinweis (H2) zum Erweitern einer Vorhersagesuchtechnik zum Codieren des Videostroms in der mindestens einen anderen Qualität, die einem Komplexitätsaufwand des Durchführens der entsprechenden erweiterten Vorhersagesuchtechnik zugeordnet ist; wobei das Anpassen des mindestens einen Steuerparameters ein Anpassen einer Vorhersagesuchtechnik auf der Grundlage des Umcodierungsanweisungshinweises umfasst.

3. Verfahren nach Anspruch 1 oder 2, wobei das Anpassen des mindestens einen Steuerparameters ein Anpassen der GOP-Länge mindestens eines Segments der entsprechenden Segmente des mindestens einen Videostroms, der umcodiert werden soll, umfasst.

4. Verfahren nach Anspruch 3, das ein Anpassen einer Manifestdatei, die dem mindestens einen Videostrom zugeordnet ist, umfasst, um die angepasste GOP-Länge zu berücksichtigen.

5. Verfahren nach einem der Ansprüche 3-4, wobei die GOP-Länge des mindestens einen Segments zu einer GOP-Länge, die größer als eine vordefinierte GOP-Mindestlänge ist, verringert wird und/oder die GOP-Länge des mindestens einen Segments zu einer GOP-Länge, die kleiner als eine vordefinierte GOP-Höchstlänge ist, erhöht wird.

6. Verfahren nach einem der Ansprüche 1-5, das ein Heranziehen eines Vorhersagemoduls mit maschinellem Lernen umfasst, das ein neuronales Netz umfasst, bevorzugt ein neuronales Faltungsnetz (CNN), das zum Zuordnen des mindestens einen Steuerparameters zu einer vorhergesagten intrinsischen visuellen Qualität des mindestens einen Videostroms in der mindestens einen anderen Qualität konfiguriert ist, um den mindestens einen Steuerparameter anzupassen; wobei das neuronale Netz auf der Grundlage mehrerer Referenzvideoströme, die jeweils unter Verwendung mehrerer verschiedener Steuerparameter verschiedener Komplexitäten umcodiert wurden, und auf der Grundlage einer entsprechenden Mehrzahl bevorzugt automatisch bestimmter intrinsischer visueller Qualitätspunktzahlen durch das Verwenden der mehreren verschiedenen Steuerparameter trainiert worden ist.

7. System zum Steuern eines Umcodierers (JITX) zum Umcodieren mindestens eines Videostroms (Ref_V1) von einer Referenzqualität in mindestens eine andere Qualität; wobei das System Folgendes umfasst:
- ein Komplexitätsmodul (Extraktionsvideokomplexitätssignaturen), das konfiguriert ist zum Bestimmen mindestens einer entsprechenden Komplexitätssignatur des mindestens einen Videostroms, wobei die mindestens eine entsprechende Komplexitätssignatur eine erforderliche Anzahl Umcodierungsverarbeitungsoperationen für entsprechende Segmente des mindestens einen Videostroms repräsentiert, wobei die entsprechenden Segmente eine vorgegebene Bildergruppenlänge (GOP-Länge) besitzen;
- ein Komplexitätssteuermodul (Komplexitätssteuerung), das konfiguriert ist zum Bestimmen von Komplexitätsanforderungen zum Umcodieren des mindestens einen Videostroms von der Referenzqualität in die mindestens eine andere Qualität auf der Grundlage der bestimmten mindestens einen entsprechenden Komplexitätssignatur unter Verwendung der vorgegebenen GOP-Länge;
- ein Vergleichsmodul, das konfiguriert ist zum Vergleichen der bestimmten Komplexitätsanforderungen mit einem Komplexitätsschwellenwert und
- ein Steuerparameteranpassungsmodul (Komplexitätssteuerung), das konfiguriert ist, dann, wenn festgestellt wird, dass die bestimmten Komplexitätsanforderungen den Komplexitätsschwellenwert überschreiten, den mindestens einen Steuerparameter (Suchfenster, IQA, H2) des Umcodierens zum Steuern der Komplexität derart anzupassen, dass die bestimmten Komplexitätsanforderungen unter dem Komplexitätsschwellenwert gehalten werden;
**dadurch gekennzeichnet, dass** das Steuerparameteranpassungsmodul konfiguriert ist zum Anpassen des mindestens einen Steuerparameters durch Anpassen einer Codierungsreihenfolge des mindestens einen Segments der entsprechenden Segmente des mindestens einen Videostroms, der umcodiert werden soll, durch Permutieren der Codierungsreihenfolge des mindestens einen Segments mit einer Codierungsreihenfolge mindestens eines weiteren Segments der entsprechenden Segmente des mindestens einen Videostroms, der umcodiert werden soll.

8. System nach Anspruch 7, wobei das Komplexitätssteuermodul ferner konfiguriert ist zum Bestimmen der Komplexitätsanforderungen, die auf der Grundlage mindestens eines Umcodierungshinweissignals (THS), das der mindestens einen anderen Qualität des Videostroms zugeordnet ist, bestimmt werden, wobei das mindestens eine Umcodierungshinweissignal mindestens einen Hinweis mindestens eines der Folgenden umfasst:
- einen Vorhersagedatenumsetzungshinweis zum Umsetzen von Vorhersagedaten des Videostroms in der Referenzqualität in die mindestens eine andere Qualität;
- einen Quantisierungsparameterhinweis, der konfiguriert ist zum Festlegen mindestens eines Quantisierungsparameters, der zum Codieren mindestens eines vordefinierten räumlichen Bereichs des Videostroms in der mindestens einen anderen Qualität verwendet werden soll; und
- einen Umcodierungsanweisungshinweis (H2) zum Erweitern einer Vorhersagesuchtechnik zum Codieren des Videostroms in der mindestens einen anderen Qualität, die einem Komplexitätsaufwand des Durchführens der entsprechenden erweiterten Vorhersagesuchtechnik zugeordnet ist; wobei das Anpassen des mindestens einen Steuerparameters ein Anpassen einer Vorhersagesuchtechnik auf der Grundlage des Umcodierungsanweisungshinweises umfasst.

9. System nach einem der Ansprüche 7-8, wobei das mindestens eine Steuerparameteranpassungsmodul ferner konfiguriert ist zum Anpassen des mindestens einen Steuerparameters durch Anpassen der GOP-Länge mindestens eines Segments der entsprechenden Segmente des mindestens einen Videostroms, der umcodiert werden soll.

10. System nach Anspruch 9, das ferner konfiguriert ist zum Anpassen einer Manifestdatei, die dem mindestens einen Videostrom zugeordnet ist, um die angepasste GOP-Länge zu berücksichtigen.

11. System nach einem der Ansprüche 9-10, wobei das mindestens eine Steuerparameteranpassungsmodul ferner konfiguriert ist zum Verringern der GOP-Länge des mindestens einen Segments zu einer GOP-Länge, die größer als eine vordefinierte GOP-Mindestlänge ist, und/oder zum Erhöhen der GOP-Länge des mindestens einen Segments zu einer GOP-Länge, die kleiner als eine vordefinierte GOP-Höchstlänge ist.

12. System nach einem der Ansprüche 7-11, das ein Vorhersagemodul mit maschinellem Lernen umfasst, das ein neuronales Netz umfasst, bevorzugt ein neuronales Faltungsnetz (CNN), das zum Zuordnen des mindestens einen Steuerparameters zu einer vorhergesagten intrinsischen visuellen Qualität des mindestens einen Videostroms in der mindestens einen anderen Qualität konfiguriert ist; wobei das neuronale Netz konfiguriert ist, auf der Grundlage mehrerer Referenzvideoströme, die jeweils unter Verwendung mehrerer verschiedener Steuerparameter verschiedener Komplexitäten umcodiert wurden, und auf der Grundlage einer entsprechenden Mehrzahl bevorzugt automatisch bestimmter intrinsischer visueller Qualitätspunktzahlen durch das Verwenden der mehreren verschiedenen Steuerparameter trainiert zu werden; und wobei das System konfiguriert ist, das Vorhersagemodul mit maschinellem Lernen heranzuziehen, um den mindestens einen Steuerparameter anzupassen.

13. Computerprogrammprodukt, das ein computerausführbares Programm von Anweisungen zum Durchführen, wenn es in einem Computer ausgeführt wird, der Schritte des Verfahrens nach einem der Ansprüche 1-6 umfasst.

## Revendications

1. Procédé pour commander le transcodage d'au moins un flux vidéo, Ref_V1, d'une qualité de référence en au moins une qualité différente ; le procédé comprenant :
- la détermination d'au moins une signature de complexité respective de l'au moins un flux vidéo, où ladite au moins une signature de complexité respective est représentative d'un nombre requis d'opérations de traitement de transcodage pour des segments respectifs de l'au moins un flux vidéo, lesdits segments respectifs ayant une longueur prédéterminée de groupe d'images, GOP ;
- la détermination des exigences de complexité pour transcoder l'au moins un flux vidéo de la qualité de référence en l'au moins une qualité différente, sur la base de l'au moins une signature de complexité respective déterminée, en utilisant ladite longueur de GOP prédéterminée ;
- la comparaison des exigences de complexité déterminées à un seuil de complexité ; et
- s'il est constaté que les exigences de complexité déterminées dépassent le seuil de complexité, l'adaptation d'au moins un paramètre de commande (fenêtre de recherche, IQA, H2) du transcodage pour contrôler la complexité de manière à ce que lesdites exigences de complexité déterminées soient maintenues au-dessous dudit seuil de complexité ;
**caractérisé en ce que** l'adaptation de l'au moins un paramètre de commande du transcodage comprend l'adaptation d'un ordre de codage d'au moins un segment des segments respectifs de l'au moins un flux vidéo à transcoder en permutant ledit ordre de codage dudit au moins un segment avec un ordre de codage d'au moins un autre segment des segments respectifs de l'au moins un flux vidéo à transcoder.

2. Procédé selon la revendication 1, dans lequel les exigences de complexité sont en outre déterminées sur la base d'au moins un signal d'indication de transcodage, THS, associé à l'au moins une qualité différente du flux vidéo, l'au moins un signal d'indication de transcodage comprenant au moins une indication parmi au moins une des indications suivantes :
- une indication de traduction de données de prédiction pour traduire les données de prédiction du flux vidéo de la qualité de référence en l'au moins une qualité différente ;
- une indication de paramètre de quantification configurée pour spécifier au moins un paramètre de quantification à utiliser pour coder au moins une région spatiale prédéfinie du flux vidéo dans l'au moins une qualité différente ; et
- une indication d'instruction de transcodage (112) pour étendre une technique de recherche de prédiction pour coder le flux vidéo dans l'au moins une qualité différente, associée à un coût de complexité d'exécution de la technique de recherche de prédiction étendue respective ; où l'adaptation de l'au moins un paramètre de commande comprend l'adaptation d'une technique de recherche de prédiction basée sur l'indication d'instruction de transcodage.

3. Procédé selon la revendication 1 ou la revendication 2, dans lequel l'adaptation de l'au moins un paramètre de commande comprend l'adaptation de la longueur de GOP d'au moins un segment des segments respectifs de l'au moins un flux vidéo à transcoder.

4. Procédé selon la revendication 3, comprenant l'adaptation d'un fichier manifeste associé à l'au moins un flux vidéo de manière à prendre en compte la longueur de GOP adaptée.

5. Procédé selon l'une quelconque des revendications 3 et 4, dans lequel la longueur de GOP d'au moins un segment est diminuée à une longueur de GOP supérieure à une longueur de GOP minimale prédéfinie et/ou dans lequel la longueur de GOP de l'au moins un segment est augmentée à une longueur de GOP inférieure à une longueur de GOP maximale prédéfinie.

6. Procédé selon l'une quelconque des revendications 1 à 5, comprenant la consultation d'un module de prédiction d'apprentissage machine comprenant un réseau neuronal, de préférence un réseau neuronal convolutionnel, CNN, configuré pour associer l'au moins un paramètre de commande à une qualité visuelle intrinsèque prédite de l'au moins un flux vidéo dans l'au moins une qualité différente, de manière à adapter l'au moins un paramètre de commande ; où le réseau neuronal a été entraîné sur la base d'une pluralité de flux vidéo de référence transcodés chacun en utilisant une pluralité de paramètres de commande différents de complexités différentes, et sur la base d'une pluralité correspondante de scores de qualité visuelle intrinsèque déterminés de préférence automatiquement du fait de l'utilisation de la pluralité de paramètres de commande différents.

7. Système de commande d'un transcodeur, JITX, pour le transcodage d'au moins un flux vidéo, Ref_V1, d'une qualité de référence en au moins une qualité différente ; le système comprenant :
- un module de complexité (Extraction Video Complexity Signatures) configuré pour déterminer au moins une signature de complexité respective de l'au moins un flux vidéo, où ladite au moins une signature de complexité respective est représentative d'un nombre requis d'opérations de traitement de transcodage pour des segments respectifs de l'au moins un flux vidéo, lesdits segments respectifs ayant une longueur prédéterminée de groupe d'images, GOP ;
- un module de commande de complexité (Complexity Control) configuré pour déterminer les exigences de complexité pour transcoder l'au moins un flux vidéo de la qualité de référence en l'au moins une qualité différente, sur la base de l'au moins une signature de complexité respective déterminée, en utilisant ladite longueur de GOP prédéterminée ;
- un module de comparaison configuré pour comparer les exigences de complexité déterminées à un seuil de complexité ; et
- un module d'adaptation de paramètre de commande (Complexity Control) configuré pour, s'il est constaté que les exigences de complexité déterminées dépassent le seuil de complexité, adapter au moins un paramètre de commande (fenêtre de recherche, IQA, H2) du transcodage pour contrôler la complexité de manière à ce que lesdites exigences de complexité déterminées soient maintenues au-dessous dudit seuil de complexité ;
**caractérisé en ce que** le module d'adaptation de paramètre de commande est configuré pour adapter l'au moins un paramètre de commande en adaptant un ordre de codage d'au moins un segment des segments respectifs de l'au moins un flux vidéo à transcoder en permutant ledit ordre de codage dudit au moins un segment avec un ordre de codage d'au moins un autre segment des segments respectifs de l'au moins un flux vidéo à transcoder.

8. Système selon la revendication 7, dans lequel le module de commande de complexité est en outre configuré pour déterminer les exigences de complexité déterminées sur la base d'au moins un signal d'indication de transcodage, THS, associé à l'au moins une qualité différente du flux vidéo, l'au moins un signal d'indication de transcodage comprenant au moins une indication parmi au moins une des indications suivantes :
- une indication de traduction de données de prédiction pour traduire les données de prédiction du flux vidéo de la qualité de référence en l'au moins une qualité différente ;
- une indication de paramètre de quantification configurée pour spécifier au moins un paramètre de quantification à utiliser pour coder au moins une région spatiale prédéfinie du flux vidéo dans l'au moins une qualité différente ; et
- une indication d'instruction de transcodage (H2) pour étendre une technique de recherche de prédiction pour coder le flux vidéo dans l'au moins une qualité différente, associée à un coût de complexité d'exécution de la technique de recherche de prédiction étendue respective ; où l'adaptation de l'au moins un paramètre de commande comprend l'adaptation d'une technique de recherche de prédiction basée sur l'indication d'instruction de transcodage.

9. Système selon l'une quelconque des revendications 7 et 8, dans lequel l'au moins un module d'adaptation de paramètre de commande est en outre configuré pour adapter l'au moins un paramètre de commande en adaptant la longueur de GOP d'au moins un segment des segments respectifs de l'au moins un flux vidéo à transcoder.

10. Système selon la revendication 9, configuré en outre pour adapter un fichier manifeste associé à l'au moins un flux vidéo de manière à prendre en compte la longueur de GOP adaptée.

11. Système selon l'une quelconque des revendications 9 et 10, dans lequel l'au moins un module d'adaptation de paramètre de commande est en outre configuré pour diminuer la longueur de GOP de l'au moins un segment à une longueur de GOP supérieure à une longueur de GOP minimale prédéfinie et/ou pour augmenter la longueur de GOP de l'au moins un segment à une longueur de GOP inférieure à une longueur de GOP maximale prédéfinie.

12. Système selon l'une quelconque des revendications 7 à 11, comprenant un module de prédiction d'apprentissage machine comprenant un réseau neuronal, de préférence un réseau neuronal convolutionnel, CNN, configuré pour associer l'au moins un paramètre de commande à une qualité visuelle intrinsèque prédite de l'au moins un flux vidéo dans l'au moins une qualité différente ; où le réseau neuronal est configuré pour être entraîné sur la base d'une pluralité de flux vidéo de référence transcodés chacun en utilisant une pluralité de paramètres de commande différents de complexités différentes, et sur la base d'une pluralité correspondante de scores de qualité visuelle intrinsèque déterminés de préférence automatiquement du fait de l'utilisation de la pluralité de paramètres de commande différents ; et où le système est configuré pour consulter le module de prédiction d'apprentissage machine afin d'adapter l'au moins un paramètre de commande.

13. Produit programme informatique comprenant un programme d'instructions exécutable par ordinateur pour exécuter, lorsqu'il est exécuté sur un ordinateur, les étapes du procédé de l'une quelconque des revendications 1 à 6.
